# EUROPÄISCHE PATENTSCHRIFT

(11) **EP 2 608 335 B1**
(45) Veröffentlichungstag und Bekanntmachung des Hinweises auf die Patenterteilung: **24.09.2014**
(21) Anmeldenummer: 12008675.6
(22) Anmeldetag: 21.12.2012
(51) Int. Cl.: H02G 3/14

(54) **Einbaugehäuse**
Recessed housing
Boîtier à affleurement

(30) Priorität: 22.12.2011 DE 102011122378
(43) Veröffentlichungstag der Anmeldung: 26.06.2013
(73) Patentinhaber: Bachmann Technology GmbH & Co. KG, 70565 Stuttgart (DE)
(72) Erfinder: Thaler, Roland, 70567 Suttgart (DE)
(74) Vertreter: Schuster, Müller & Partner

(56) Entgegenhaltungen:
- DE-A1-102007 063 585
- US-A- 5 240 426
- US-B1- 6 545 218

## Beschreibung

### Stand der Technik

Die Erfindung geht aus von einem Einbaugehäuse, insbesondere ein Einbaugehäuse für eine Arbeitsplatte, nach der Gattung des Anspruchs 1.

Einbausteckdosen, die beispielsweise in eine Küchenplatte eingebaut werden, haben den Nachteil, dass in den nach oben gerichteten Dosentopf Schmutz, Fremdkörper oder Feuchtigkeit eindringen könnte, falls kein Stecker in der Dose eingesteckt sein sollte.

Daher wird in der Offenlegungsschrift DE 10 2004 051 064 A1 eine Vorrichtung vorgeschlagen, die zur Aufnahme mindestens eines Steckdoseneinsatzes dient und mit einem Deckel verschließbar ist. Nachteilig ist, dass der Deckel jederzeit geöffnet werden kann und nicht dichtend schließt.

In der Offenlegungsschrift DT 24 58 243 A1 wird eine Schutzvorrichtung für Installationselemente, insbesondere elektrische Installationselemente, wie Steckdosen, Schalter odgl., beschrieben. Die Schutzvorrichtung weist eine Abdeck-Klappe auf, durch die die Installationselemente unzugänglich verdeckt werden. An der Abdeck-Klappe ist eine verdrehbare Deckelplatte angeordnet, die einen Sicherheitsriegel aufweist, durch den das Öffnen der Abdeck-Klappe nur in einer bestimmten Stellung ermöglicht wird. Nachteilig ist, dass die Abdeck-Klappe zum Öffnen nach oben geschwenkt wird, so dass sie, da sie in der Öffnungsposition über die übrigen Bauteile vorsteht, gegebenenfalls im geöffneten Zustand stört.

In der Patentschrift DE 10 2007 063 585 B4 wird eine Steckdose beschrieben, die einen in ein Frontelement integrierten Verschluss aufweist, der aus mehreren Verschlusselementen besteht. Die Verschlusselemente sind über ein Festlager bewegbar angeordnet, wobei die Bewegung radial ein- oder auswärts gegenüber dem Mittelpunkt des Frontelementes erfolgt. Vorteilhaft ist, dass dadurch das Frontelement sehr flach bauend ausgestaltet werden kann. Nachteilig ist allerdings der konstruktive Aufwand zu bewerten.

Konstruktiv aufwändig sind auch die in der Patentschrift US 6,542,218 B1 und in der Patentschrift US 5,240,426 B1 beschriebenen verschließbaren Steckdosen.

### Die Erfindung und ihre Vorteile

Das erfindungsgemäße Einbaugehäuse, mit dem kennzeichnenden Merkmal des Anspruchs 1, ist daher mit einer Abdeckung ausgestattet, wobei die beweglich an einer Gehäusewandung angeordnete Abdeckung aus einer das Einbaugehäuse, insbesondere die Steckdosen, verschließenden Position in eine das Einbaugehäuse, insbesondere die Steckdosen, freigebende Position verdreht werden kann.

Nach einer vorteilhaften Ausgestaltung des erfindungsgemäßen Einbaugehäuses entriegelt eine Entriegelung mindestens einen Verschluss.

Nach einer diesbezüglichen vorteilhaften Ausgestaltung des erfindungsgemäßen Einbaugehäuses ist die Entriegelung federbelastet.

Nach einer zusätzlichen vorteilhaften Ausgestaltung des erfindungsgemäßen Einbaugehäuses ist der Verschluss federbelastet.

Nach einer diesbezüglichen vorteilhaften Ausgestaltung des erfindungsgemäßen Einbaugehäuses ist die Abdeckung drehbar an der Gehäusewandung angeordnet. Somit ist die Abdeckung eine Abdeckscheibe.

Nach einer zusätzlichen vorteilhaften Ausgestaltung des erfindungsgemäßen Einbaugehäuses ist die Bewegung der Abdeckung nur bei einem entriegeltem Verschluss möglich. Dies bewirkt, dass die Abdeckung beispielsweise nur bei gedrückter Entriegelung verdreht werden kann.

Nach einer zusätzlichen vorteilhaften Ausgestaltung des erfindungsgemäßen Einbaugehäuses weist die Abdeckung auf ihrer dem Innenraum zugewandten Seite mindestens eine Vertiefung zur Aufnahme eines Verschlusses auf. Befindet sich der Verschluss in der Vertiefung kann die Abdeckung nicht verdreht werden, da diese Verdrehung durch den in der Vertiefung befindlichen Verschluss blockiert wird.

Nach einer zusätzlichen vorteilhaften Ausgestaltung des erfindungsgemäßen Einbaugehäuses ist im Innenraum mindestens eine Vertiefung zur Aufnahme eines Verschlusses angeordnet. Diese Vertiefung dient zur Aufnahme des Verschlusses, wenn die Entriegelung betätigt wird, so dass durch den in der Vertiefung befindlichen Verschluss die Abdeckung verdreht werden kann.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und wird im Folgenden näher erläutert. Es zeigen:
- Fig. 1: eine perspektivische Darstellung eines erfindungsgemäßen Einbaugehäuses im geschlossenen Zustand,
- Fig. 2: eine perspektivische Darstellung eines erfindungsgemäßen Einbaugehäuses im geöffneten Zustand,
- Fig. 3: eine Aufsicht auf die Abdeckung und die Verschlüsse,
- Fig. 4: eine Seitenansicht eines erfindungsgemäßen Einbaugehäuses,
- Fig. 5: eine Unteransicht eines erfindungsgemäßen Einbaugehäuses,
- Fig. 6: eine perspektivische Darstellung eines erfindungsgemäßen Einbaugehäuses im geschlossenen Zustand,
- Fig. 7: eine perspektivische Darstellung der Unterseite eines erfindungsgemäßen Einbaugehäuses und
- Fig. 8: eine Explosionszeichnung eines erfindungsgemäßen Einbaugehäuses.

### Beschreibung des Ausführungsbeispiels

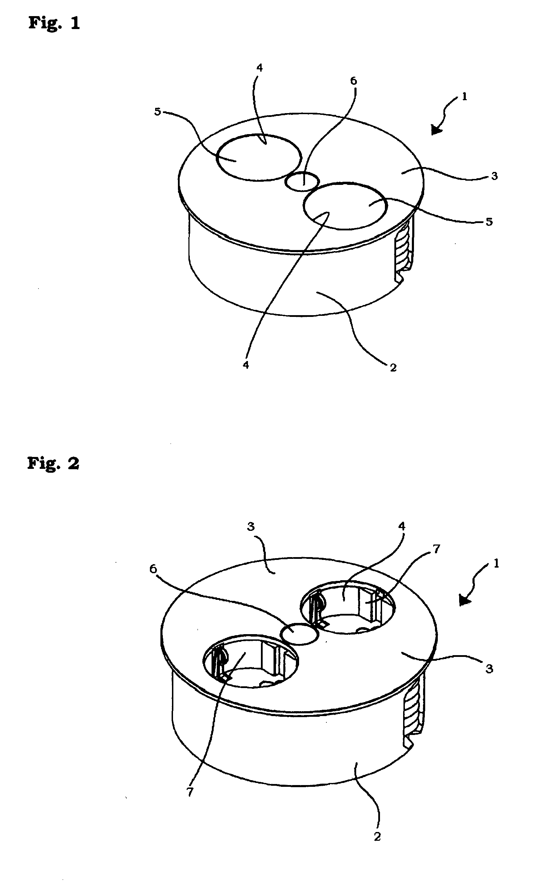

Fig. 1 zeigt eine perspektivische Darstellung eines erfindungsgemäßen Einbaugehäuses 1 im geschlossenen Zustand. Dieses weist eine Gehäusewandung 2 auf, die an ihrer nach oben gerichteten Seite mit einer Abdeckung 3 (Abdeckscheibe) abgedeckt ist. Die Abdeckung 3, die unbeweglich an der Gehäusewandung 2 fixiert ist, weist Öffnungen 4 auf, die durch Verschlüsse 5 verschlossen sind. Die Verschlüsse 5 sind mit einer Entriegelung 6 (Zentrumsknopf, Raster, Riegel) verbunden, so dass sie sich, wenn die Entriegelung 6 nach unten gedrückt wird, ebenfalls nach unten und damit aus der Öffnung 4 heraus bewegen. Durch die Freigabe der Öffnungen 4 ist die Abdeckung 3 verdrehbar. Das erfindungsgemäße Einbaugehäuse 1 kann somit nicht versehentlich geöffnet werden, da diese erst verdreht werden kann, wenn die mittig liegende Entriegelung 6 niedergedrückt wurde.

Fig. 2 zeigt eine perspektivische Darstellung eines erfindungsgemäßen Einbaugehäuses 1 im geöffneten Zustand, bei der die Abdeckung 3 derart verdreht ist, dass Steckdosen 7 zugänglich sind, so dass Stecker in die Dosentöpfe eingesteckt werden können.

Vorteilhaft ist die minimale Einbautiefe des erfindungsgemäßen Einbaugehäuse 1, das von beiden Seiten (Front und Rückseite) an der Arbeitsplatte befestigbar ist und durch Entrasten des Riegels (Entriegelung 6) und Verdrehen der Abdeckscheibe (Abdeckung 3) in zwei sicher verrastete Endpositionen (geöffneter Zustand (Steckdosen 7 bedienbar), geschlossener Zustand (Steckdosen 7 abgedeckt)) bringbar ist. Bevorzugt ist die Abdeckung 3 derart ausgestaltet, dass sie im verschlossenen Zustand dicht ist, so dass kein Dreck oder Feuchtigkeit in das Innere des erfindungsgemäßen Einbaugehäuse 1 eindringen kann. Dadurch ist das erfindungsgemäße Einbaugehäuse 1 abwischbar. Bevorzugt hat das erfindungsgemäße Einbaugehäuse 1, das auf der Arbeitsplatte, in der sie nur ein kleines Bohrloch von beispielsweise 105 mm benötigt, plan aufliegt und das Bohrloch mit einem Kragen überragt, einen sehr flachen Aufbau, der eine Tischplatte beispielsweise um nur 3 mm überragt, so dass sie nur wenige mm aufträgt. Durch die geringe Einbautiefe (z.B. 40 mm) ist das erfindungsgemäße Einbaugehäuse 1 z.B. in Küchenarbeitsplatten komplett versenkbar und somit auch über Schubladen einsetzbar. Selbstverständlich kann das erfindungsgemäße Einbaugehäuse 1 auch in Wände, Decken oder Böden eingebaut werden.

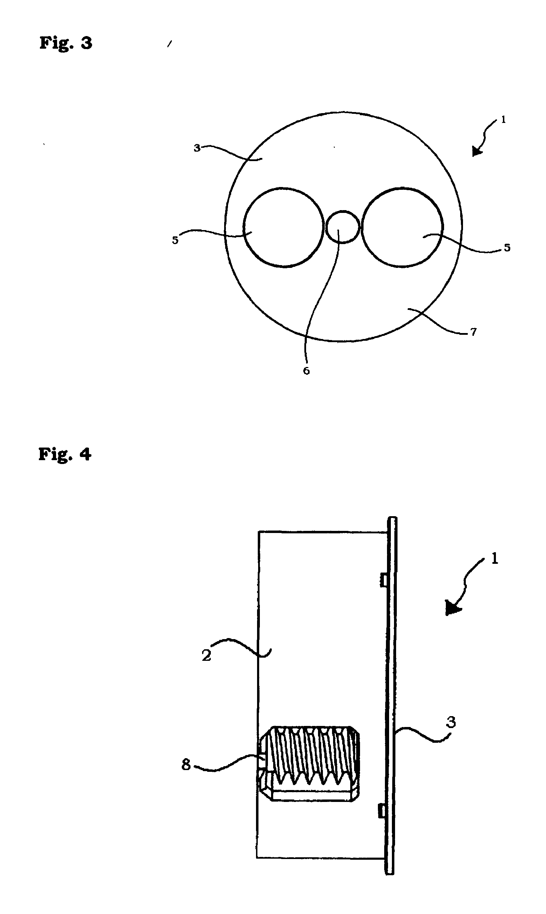

Fig. 3 zeigt eine Aufsicht auf die Abdeckung 3 und die Verschlüsse 5.

Fig. 4 zeigt eine Seitenansicht eines erfindungsgemäßen Einbaugehäuses 1. Bevorzugt ist dieses durch Exzenterschrauben 8 von unten an der nicht dargestellten Arbeitsplatte fixierbar. Denkbar ist auch, dass die Exzenterschrauben 8 von oben bedient werden oder dass die Exzenterschrauben 8 beidseitig bedient werden können. Eine Befestigung von oben ist bevorzugt möglich, wenn die Abdeckung 3 leicht verdreht ist, so dass dadurch die Exzenterschrauben 8 freigelegt und erreichbar werden.

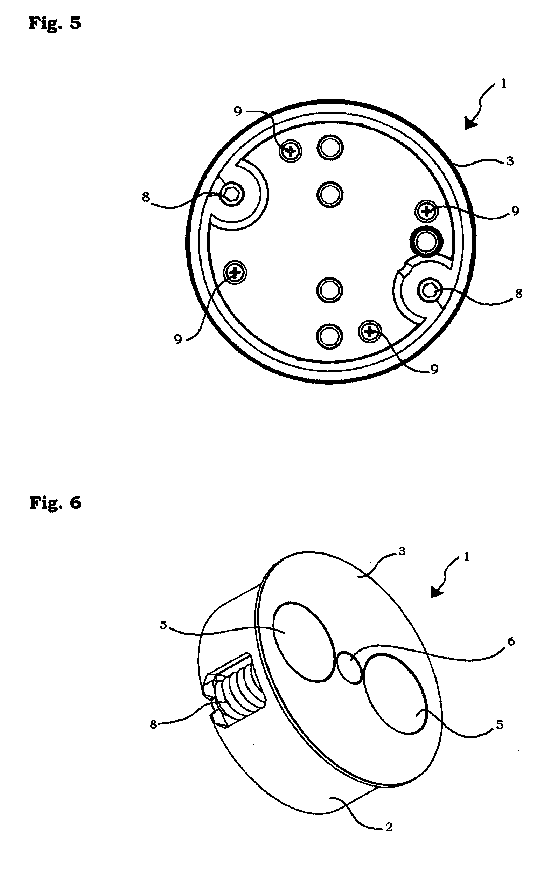

Fig. 5 zeigt eine Unteransicht eines erfindungsgemäßen Einbaugehäuses 1. Die Gehäusewandung 2 ist bevorzugt von unten mittels Schrauben 9 verschlossen.

Fig. 6 zeigt eine perspektivische Darstellung eines erfindungsgemäßen Einbaugehäuses 1 im geschlossenen Zustand.

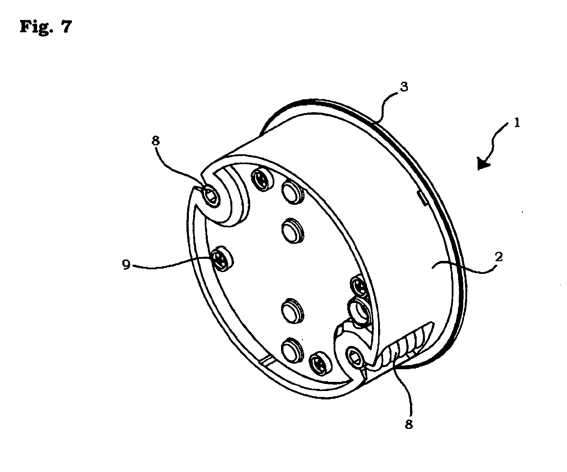

Fig. 7 zeigt eine perspektivische Darstellung der Unterseite eines erfindungsgemäßen Einbaugehäuses 1.

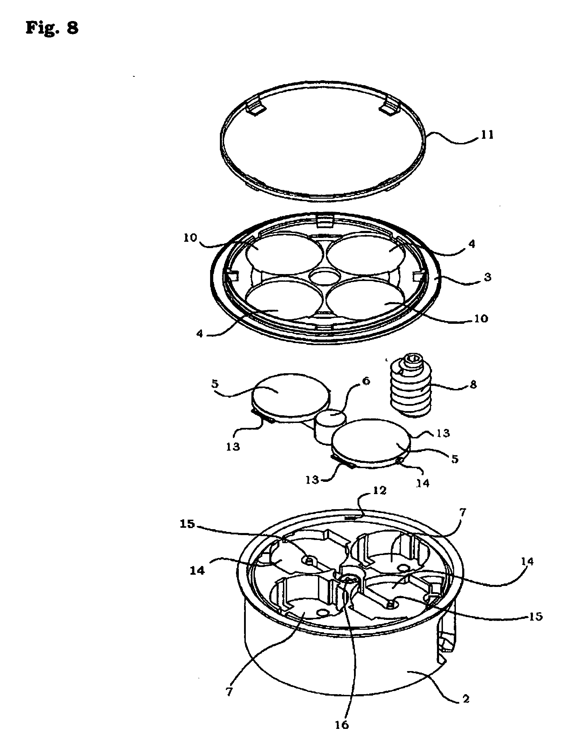

Fig. 8 zeigt eine Explosionszeichnung eines erfindungsgemäßen Einbaugehäuses 1. In der Gehäusewandung 2 befinden sich zwei Steckdosen 7. Die Entriegelung 6 ist federnd gelagert, so dass durch Drücken der Entriegelung 6 die Abdeckung 3 ent- oder verrastet werden kann. Die Abdeckung 3 weist insgesamt zwei Öffnungen 4 und zwei Vertiefungen 10 auf. Im geöffneten Zustand befinden sich die Verschlüsse 5 bei den Vertiefungen 10, so dass, wenn der Druck auf die Entriegelung 6 nachlässt, die Verschlüsse 5 in diese Vertiefungen 10 eingreifen, so dass die Abdeckung 3 nicht mehr verdrehbar ist ohne dass erneut Druck auf die Entriegelung 6 ausgeübt wird, um die Verschlüsse 5 aus den Vertiefungen 10 zu lösen.

Ein inneres Führungssegment 11 dient als Lager für die Abdeckung 3, so dass die Abdeckscheibe drehbar in diesem Führungssegment 11 gelagert ist. Dabei verhindern am Umfang angebrachte Gleitsteine ein Lösen der Abdeckung 3 von der Gehäusewandung 2.

Die in dieser Zeichnung von unten dargestellte Abdeckung 3 hat zwei Öffnungen 4, die durch den Verschluss 5 verschließbar sind, wobei Zungen 13 als Anschlag an der Unterseite der Abdeckung 3 dienen, so dass der Verschluss 5 an der Oberseite der Abdeckung 3 plan positioniert ist. Wird die Abdeckung 3, die über die Gehäusewandung 2 ragt, verdreht, dienen Nasen 14 zum Gleiten.

Im Inneren der Gehäusewandung 2 befinden sich zwei Vertiefungen 14, die beim Herunterdrücken der Entriegelung 6 die Verschlüsse 5 aufnehmen. In der Vertiefung 14 ist ein Dom 15 (Zapfen) angeordnet, über den eine Feder stülpbar ist, die von unten gegen den Verschluss 5 wirkt. Für die Entriegelung 6 ist ebenfalls ein Dom 16 (Zapfen) vorgesehen, der ebenfalls für den Einbau einer Feder dienen kann und ggfls. als Führung für die Entriegelung 6 dient, so dass diese nicht verkanten kann.

Statt herkömmlichen Steckdosen (z.B. Doppelsteckdose) sind selbstverständlich auch andere Dosen beispielsweise für Informationsanschlüsse (z.B. LAN-Dose), PC-Anschlüsse, TV-Anschlüsse (z.B. Scart-Anschlüsse), Lautsprecher, Schalter, odgl. denkbar. Selbstverständlich sind auch Kombinationen von diesen denkbar, so dass beispielsweise eine Einfachsteckdose mit einem Medienanschlussfeld für Bauteile, wie z.B. USB, computerüblichen Anschlüsse, KAT-Buchsen, HDMI, ausgerüstet sein kann.

Das erfindungsgemäße Einbaugehäuse 1 kann aus unterschiedlichen Materialien gefertigt sein, so dass z.B. eine Küchenausführung in hochwertiger Zinkdruckguss Abdeckung in Edelstahl-Optik und eine Officeausführung in eloxierter Optik hergestellt wird.

Alle hier dargestellten Merkmale können sowohl einzeln als auch in beliebiger Kombination miteinander erfindungswesentlich sein.

### Bezugszahlenliste

- 1: Einbaugehäuse
- 2: Gehäusewandung
- 3: Abdeckung
- 4: Öffnung
- 5: Verschluss
- 6: Entriegelung
- 7: Steckdose
- 8: Exzenterschraube
- 9: Schraube
- 10: Vertiefung
- 11: Führungselement
- 12: Gleitstein
- 13: Nase
- 14: Vertiefung
- 15: Dom
- 16: Dom

## Patentansprüche

1. Einbaugehäuse (1) zum Einbau in ein Möbel, eine Wand, einen Boden und/oder eine Decke,
- mit mindestens einem durch eine Gehäusewandung (2) begrenzten Innenraum, in dem mindestens eine Steckdose (7), mindestens ein Informationsanschluss odgl. und/oder mindestens ein Schalter untergebracht ist, wobei der Innenraum durch eine Abdeckung (3) abgedeckt ist, wobei die Abdeckung (3) mindestens eine durch einen Verschluss (5) verschließbare Öffnung (4) aufweist und die Abdeckung (3) beweglich an der Gehäusewandung (2) angeordnet ist,
**dadurch gekennzeichnet,**
**dass** die Bewegung der Abdeckung (3) nur bei einem entriegelten Verschluss möglich ist.

2. Einbaugehäuse (1), nach Anspruch 1,
**dadurch gekennzeichnet,**
**dass** eine Entriegelung (6) mindestens einen Verschluss (5) entriegelt.

3. Einbaugehäuse (1), nach Anspruch 2,
**dadurch gekennzeichnet,**
**dass** die Entriegelung (6) federbelastet ist.

4. Einbaugehäuse (1), nach einem der vorhergehenden Ansprüche,
**dadurch gekennzeichnet,**
**dass** der Verschluss (5) federbelastet ist.

5. Einbaugehäuse (1), nach einem der vorhergehenden Ansprüche,
**dadurch gekennzeichnet,**
**dass** die Abdeckung (3) drehbar an der Gehäusewandung (2) angeordnet ist.

6. Einbaugehäuse (1), nach einem der vorhergehenden Ansprüche,
**dadurch gekennzeichnet,**
**dass** die Bewegung der Abdeckung (3) nur bei einem entriegeltem Verschluss (5) möglich ist.

7. Einbaugehäuse (1), nach einem der vorhergehenden Ansprüche,
**dadurch gekennzeichnet,**
**dass** die Abdeckung (3) auf ihrer dem Innenraum zugewandten Seite mindestens eine Vertiefung (10) zur Aufnahme eines Verschlusses (5) aufweist.

8. Einbaugehäuse (1), nach einem der vorhergehenden Ansprüche,
**dadurch gekennzeichnet,**
**dass** im Innenraum mindestens eine Vertiefung (14) zur Aufnahme eines Verschlusses (5) angeordnet ist.

## Claims

1. An installation housing (1) for installation into an item of furniture, a wall, a floor, and/or a ceiling,
- with at least one interior space bounded by a housing wall (2), in which at least one socket (7), at least one information connection, or similar, and/or at least one switch is accommodated, wherein the interior space is covered by a cover (3), wherein the cover (3) has at least one opening (4) that can be closed by means of a closure device (5), and the cover (3) is arranged on the housing wall (2) such that it can be moved,
**characterised in that**
the movement of the cover (3) is only possible if the closure device is unlocked.

2. The installation housing (1) according to claim 1,
**characterised in that**
an unlocking device (6) unlocks at least one closure device (5).

3. The installation housing (1) according to claim 2,
**characterised in that**
the unlocking device (6) is spring-loaded.

4. The installation housing (1) according to any one of the preceding claims,
**characterised in that**
the closure device (5) is spring-loaded.

5. The installation housing (1) according to any one of the preceding claims,
**characterised in that**
the cover (3) is arranged on the housing wall (2) such that it can be rotated.

6. The installation housing (1) according to any one of the preceding claims,
**characterised in that**
the movement of the cover (3) is only possible if the closure device (5) is unlocked.

7. The installation housing (1) according to any one of the preceding claims,
**characterised in that**
the cover (3) has at least one depression (10), on its side facing towards the interior space, for purposes of accommodating a closure device (5).

8. The installation housing (1) according to any one of the preceding claims,
**characterised in that**
at least one depression (14) is arranged in the interior space for purposes of accommodating a closure device (5).

## Revendications

1. Boîtier d'encastrement (1) pour l'encastrement dans un meuble, un mur, un plancher et/ou un plafond,
- avec au moins un espace intérieur délimité par une paroi de boîtier (2), dans lequel est logé au moins une prise de courant (7), au moins un point de connexion d'information ou similaire et/ou au moins un commutateur, l'espace intérieur étant recouvert par un couvercle (3), le couvercle (3) présentant au moins une ouverture (4) pouvant être fermée grâce à une fermeture (5) et le couvercle (3) étant disposé de manière mobile sur la paroi de boîtier (2),
**caractérisé en ce que** le déplacement du couvercle (3) est seulement possible en cas de fermeture déverrouillée.

2. Boîtier d'encastrement (1) selon la revendication 1,
**caractérisé en ce qu'**
un déverrouillage (6) déverrouille au moins une fermeture (5).

3. Boîtier d'encastrement (1) selon la revendication 2,
**caractérisé en ce que**
le déverrouillage (6) est contraint par ressort.

4. Boîtier d'encastrement (1) selon l'une des revendications précédentes,
**caractérisé en ce que**
la fermeture (5) est contrainte par ressort.

5. Boîtier d'encastrement (1) selon l'une des revendications précédentes,
**caractérisé en ce que**
le couvercle (3) est disposé de manière rotative sur la paroi du boîtier (2).

6. Boîtier d'encastrement (1) selon l'une des revendications précédentes,
**caractérisé en ce que**
le déplacement du couvercle (3) est seulement possible en cas de fermeture (5) déverrouillée.

7. Boîtier d'encastrement (1) selon l'une des revendications précédentes,
**caractérisé en ce que**
le couvercle (3) présente, sur sa face tournée vers l'espace intérieur, au moins un creux (10) pour la réception d'une fermeture (5).

8. Boîtier d'encastrement (1) selon l'une des revendications précédentes,
**caractérisé en ce qu'**
au moins un creux (14) pour la réception d'une fermeture (5) est aménagé dans l'espace intérieur.
